# EUROPÄISCHE PATENTANMELDUNG

(11) **EP 1 503 197 A2**
(43) Veröffentlichungstag der Anmeldung: **02.02.2005**
(21) Anmeldenummer: 04014544.3
(22) Anmeldetag: 22.06.2004
(51) Int. Cl.: G01L 9/00

(54) **Sensoreinlasskanal**

(30) Priorität: 28.07.2003 DE 10334238
(71) Anmelder: ROBERT BOSCH GMBH, 70442 Stuttgart (DE)
(72) Erfinder: Recknagel, Rolf-Jürgen, 07747 Jena (DE); Wellhoefer, Matthias, 71701 Schwieberdingen (DE)

(57) **Zusammenfassung**

Mit der vorliegenden Erfindung wird ein mikromechanischer Sensor bzw. ein Verfahren zur Herstellung eines mikromechanischen Sensors beschrieben, der wenigstens eine Zustandsgröße einer Substanz erfasst. Dabei ist vorgesehen, dass der Sensor wenigstens einen ersten Bereich zur Aufnahme der Substanz aufweist, sowie einen Zugangskanal, durch den ein Austausch der Substanz zwischen dem ersten und einem zweiten Bereich ermöglicht wird. Der Kern der Erfindung besteht nun darin, dass nach der Erzeugung des Zugangskanals durch einen Ätz- oder Prägeprozess die Wand des Zugahgskanals eine weitere Behandlung erfährt. Bei dieser zusätzlichen Behandlung wird auf die Wand eine Oberflächenstrukturierung aufgebracht, die durch die Art der Behandlung oder durch die bei der Behandlung eingesetzten Materialien gestaltbar bzw. vorgebbar ist.

## Beschreibung

### Stand der Technik

Die Erfindung geht aus von einem mikromechanischen Sensor bzw. von einem Verfahren zur Herstellung eines mikromechanischen Sensors zur Erfassung einer Zustandsgröße einer Substanz, der mit einem Sensoreinlasskanal ausgestattet ist.

In der DE 199 29 025 A1 wird ein Drucksensor beschrieben, der zwei Kammern zur Druckmessung aufweist. Die Druckmessung erfolgt dabei über piezoresistive Elemente auf einer Membran, die die beiden Kammern voneinander trennt. Eine der Kammern ist derart ausgebildet, dass sie einen Referenzraum definiert, wohingegen die Druckzuführung aus der Umgebung des Drucksensors in die zweite Kammer durch einen Druckkanal erfolgt. Der Druckkanal wird dabei in einem Ausführungsbeispiel durch eine Öffnung und einen Durchlass in der Kappenoberseite realisiert.

Wie die DE 100 57 258 C1 zeigt, ist jedoch auch bei Temperatursensoren eine Ausgestaltung des Sensors mit einer Durchlassöffnung möglich. So wird in der DE 100 57 258 C1 der Temperatursensor.in einem Gehäuse untergebracht, wobei der Gehäusedeckel eine Öffnung aufweist, durch die eine Änderung der Luft, die den Sensor umgibt, an die Temperatursensoren weitergegeben werden kann.

Die aufgezeigten Patentschriften zeigen unterschiedliche Realisierungen eines mikromechanischen Sensors, der wenigstens eine Kaverne, eine Messkammer bzw. einen Hohlraum zur Aufnahme einer Substanz aufweist. Um die gewünschten Messgrößen der Substanz mit dem Sensor zu erfassen, sind innerhalb bzw. in der Nähe der Kaverne Sensorelemente untergebracht, die die Zustandsgrößen der Substanz in der Kaverne erfassen. Weiterhin ist es zum Zwecke einer dynamischen Erfassung der Zustandsgrößen der Substanz notwendig, einen Austausch der Substanz in der Kaverne zu ermöglichen. Dies kann beispielsweise durch eine Öffnung bzw. einen Sensoreinlasskanal geschehen, der aus einem Außenbereich des Sensors in die Kaverne führt. Typischerweise werden derartige Sensoreinlasskanäle bei Relativdrucksensoren eingesetzt, wobei generell jeder Sensor, der zur Erfassung von Zustandsgrößen einer Substanz eingesetzt wird, über Zugangs- bzw. Ausgangsöffnungen verfügen kann, um eine kontinuierliche Messwerterfassung zu ermöglichen.

### Vorteile der Erfindung

Während vielfach die Herstellung der Kaverne ausführlich im Stand der Technik beschrieben wird, wird die Problematik des Verstopfens des Sensoreinlasskanals bzw. der Zugangsöffnungen in die Kaverne oft vernachlässigt. Beim ständigen Austausch der zu erfassenden Substanz in der als Messkammer dienenden Kaverne, können sowohl Schmutzteilchen als auch Kondenswasser in die Kaverne gelangen. Im ungünstigsten Fall verbleiben die Schmutzteilchen in der Kaverne und setzten sich an den Wänden der Messkammer oder auf den Sensorelementen ab. Bei einer Ablagerung an den Wänden des Sensoreinlasskanals kann es dann dazu kommen, dass ein Austausch der Substanz in der Messkammer mit der Umgebung nur eingeschränkt erfolgt, was zu einer verminderten Messgenauigkeit bzw. Messansprechgeschwindigkeit führen kann. Weiterhin besteht für gasförmige Substanzen die Möglichkeit, dass sich im Laufe der aufeinander folgenden Messzyklen Kondenswasser in der Messkammer ausbildet. Je nach Ausgestaltung des Sensors kann dabei ein Abfließen des Kondenswasser dadurch erleichtert werden, dass die Öffnung zur Messkammer hin nach unten zeigt. Darüber hinaus können jedoch auch spezielle Geometrien der Öffnungen bzw. der Sensoreinlasskanäle verwendet werden, die die Ablagerung von Schmutzteilchen und/oder Kondenswasser minimieren.

Mit der vorliegenden Erfindung wird ein mikromechanischer Sensor bzw. ein Verfahren zur Herstellung eines mikromechanischen Sensors beschrieben, der wenigstens eine Zustandsgröße einer Substanz erfasst. Dabei ist vorgesehen, dass der Sensor wenigstens einen ersten Bereich zur Aufnahme der Substanz aufweist, sowie einen Zugangskanal, durch den ein Austausch der Substanz zwischen dem ersten und einem zweiten Bereich ermöglicht wird. Der Kern der Erfindung besteht nun darin, dass nach der Erzeugung des Zugangskanals durch einen Ätz- oder Prägeprozess die Wand des Zugangskanals eine weitere Behandlung erfährt. Bei dieser zusätzlichen Behandlung wird auf die Wand eine Oberflächenstrukturierung aufgebracht, die durch die Art der Behandlung oder durch die bei der Behandlung eingesetzten Materialien gestaltbar bzw. vorgebbar ist.

Vorteilhafterweise wird der Zugangskanals in einem oder mehreren Verfahrenschritten aus einem ersten Material herausgeätzt. In einem weiteren Verfahrensschritt wird anschließend wenigstens auf einem Teil der Wände des Zugangskanals eine Oberflächenstrukturierung aufgebracht, die eine hydrophobe Wirkung erzeugt. Dabei kann auch vorgesehen sein, dass zumindest Teile der Kaverne mit einer derartigen Oberflächenstruktur versehen wird. Diese Oberflächenstrukturierung, die eine hydrophobe bzw. ultra-hydrophobe Wirkung aufweist, wird erfindungsgemäß durch ein zweites Material erzeugt. Vorzugsweise wird durch die Strukturierung auf der Oberfläche des Zugangskanals eine Strukturierung aufgebracht, die sich erst im Mikro- bzw. Nanometermaßstab zu erkennen gibt.

Erfindungsgemäß wird in das zweite Material, das auf die Wand des Zugangskanals aufgebracht wird, ein elektrisches Bauelement integriert. Dabei ist jedoch nicht notwendig, dass dieses elektrische Bauelement über die gesamte Länge oder den gesamten Umfang der Zugangsöffnung angeordnet ist. Zweck dieses elektrischen Bauelements ist in einer besonderen Ausgestaltung der Erfindung, mittels einer entsprechenden Steuerung den Zugangskanal zu vorgebbaren Zeitpunkten zu heizen. Durch eine derartige Heizung kann beispielsweise Kondenswasser, das sich an der Wand des Zugangskanals angesammelt hat, verdampft werden.

Eine Weiterbildung der Erfindung besteht darin, dass der Sensor aus einem oder mehreren Halbleiterbauelementen bzw. Halbleiterschichten hergestellt wird. So kann der Sensor Silizium, Siliziumoxid, dotiertes Silizium, poröses Silizium, Nitrid oder ein anderes typisches Material enthalten, welches üblicherweise zur Herstellung eines mikromechanisches Sensors verwandt wird. Denkbar ist weiterhin, dass die Membran durch einen Ätzprozess erzeugt wird oder als Stahlmembran ausgebildet ist. Dagegen ist das zweite Material, welches wenigstens auf einen Teil der Wand der Zugangsöffnung aufgebracht wird, vorzugsweise ein Polymer oder ein Kunststoff.

Weiterhin ist in einer weiteren Ausführungsform vorgesehen, dass der erste Bereich im Sensor derart ausgestaltet ist, dass er die Substanz, von der die wenigstens eine Zustandsgröße ermittelt werden soll, aufnehmen kann. Typischerweise wird ein solcher Bereich als Kaverne, Hohlraum oder Messkammer erzeugt. Im weiteren kann die Substanz aus dem ersten Bereich mit der Substanz in einem zweiten Bereich ausgetauscht werden. Dies kann beispielsweise kontinuierlich oder auch nur zu vorgebbaren Zeitpunkten geschehen. Dabei kann der zweite Bereich sowohl den den Sensor umgebende Außenraum, als auch ein ein spezielles Volumen sein, von dem unter vorgebbaren Bedingungen eine gewisse Menge der Substanz in den ersten Bereich gebracht werden kann. Die Zustandsgröße der Substanz wird vorzugsweise durch ein Sensorelement erfasst, wobei neben einer Membran auch optional eine Widerstandsstruktur und/oder ein Piezoelement vorgesehen sein kann. Weiterhin ist denkbar, dass neben einem Drucksensor auch ein Massenflusssensor mit einer erfindungsgemäßen Oberflächenstrukturierung ausgestattet sein kann. Allgemein ist dabei vorgesehen, dass als Zustandsgröße ein Druck, eine Temperatur, eine Dichte und/oder eine Luftmasse mit dem erfindungsgemäßen Sensor erfasst werden kann. Als Substanz kann dabei ein Gas und/oder eine Flüssigkeit vorgesehen sein.

Mit der vorgeschlagenen Erfindung kann ein Anhaften von Partikeln und/oder von Kondenswasser an den Wänden der Kaverne und/oder der Zugangsöffnung erschwert, wenn nicht gänzlich verhindert werden. Weiterhin kann durch den erleichterten Abfluss des Kondenswasser an den Wänden durch die vorgeschlagene Oberflächenstrukturierung ein "Selbstreinigungseffekt" erzielt werden, bei dem Partikel auf den Wänden durch Tropfen des Kondenswassers aus der Kaverne bzw. Zugangsöffnung entfernt werden.

Weitere Vorteile ergeben sich aus der nachfolgenden Beschreibung von Ausführungsbeispielen bzw. aus den abhängigen Patentansprüchen.

### Zeichnungen

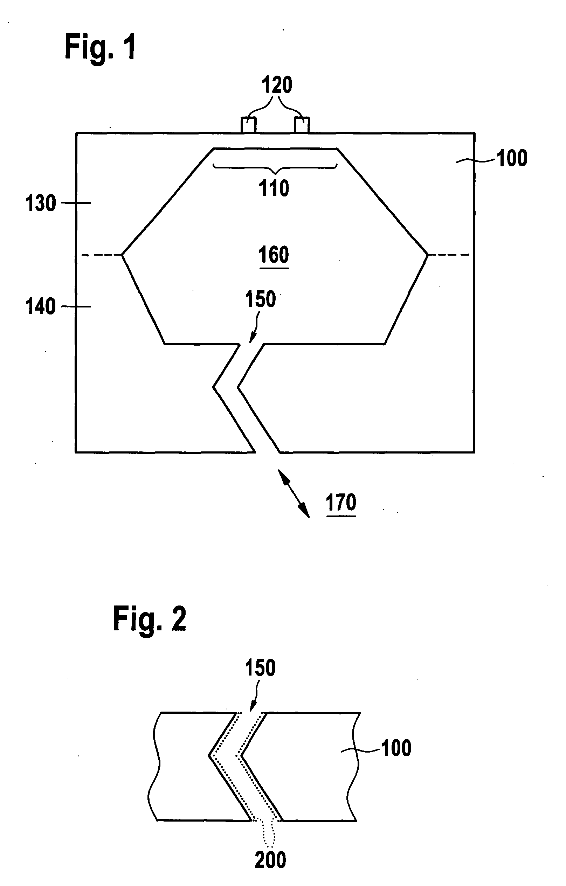

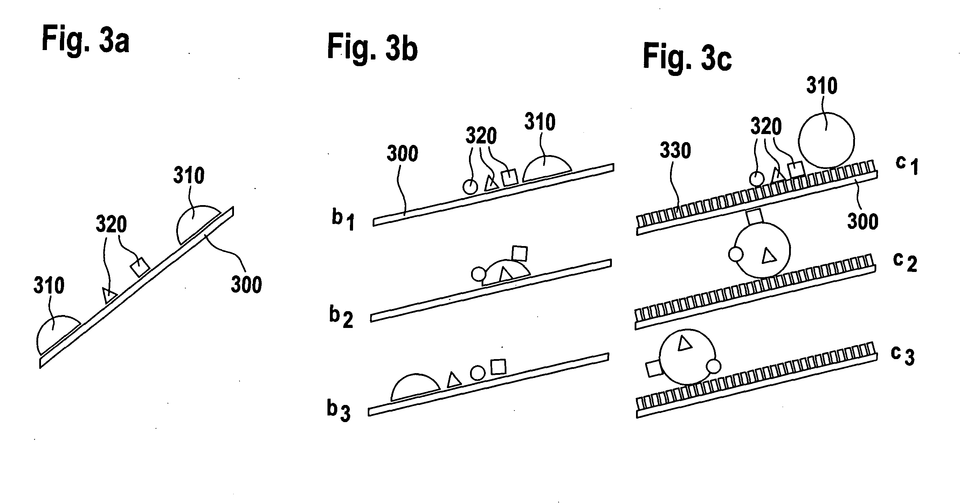

Figur 1 zeigt schematisch den Aufbau eines Drucksensors. In Figur 2 ist die Zugangsöffnung des Drucksensors der Figur 1 mit der erfindungsgemäßen Beschichtung zur Oberflächenstrukturierung dargestellt. Die Figuren 3a-c zeigen verschiedene Beispiele, wie Partikel und Wassertropfen auf einer Oberfläche haften bzw. abperlen.

### Ausführungsbeispiel

Gängige mikromechanische Sensoren werden häufig in nahezu geschlossenen Gehäusen untergebracht, beispielsweise um die Sensibilität der Sensorelemente zu erhöhen. Da bei diesen Sensoren jedoch wie etwa bei einem Drucksensor eine direkte Verbindung einer Kaverne zum Außenraum zur Erfassung der Zustandsgrößen der überwachten Substanz notwendig ist, kann es zu Problemen der Messwertaufnahme kommen, wenn unerwünschte Fremdstoffe in das Gehäuse eindringen. So können sich beispielsweise Schmutz, Staub, Wasser oder auch andere Partikel auf dem Sensorelement des Sensors oder den Wänden der Kaverne absetzten und die Funktionstüchtigkeit des Sensors einschränken. Dies kann sogar soweit gehen, dass der Sensor falsche oder gar keine Messwerte mehr liefert. Eine Möglichkeit, diese Beeinträchtigung der Messwerterfassung zu minimieren, besteht darin, die Geometrie der Sensoreinlasskanäle entsprechend zu gestalten, so dass ein Eindringen von Fremdstoffen erschwert wird oder ein Abführen der Fremdstoffe erleichtert wird. Neben der Verschmutzung der Sensorelemente selbst, kann es auch zu Ablagerungen an den Sensoreinlasskanälen kommen. Eine derartige Ablagerung würde unter Umständen nach sich ziehen, dass der Einlass der Substanz in die Messkammer behindert wird. In einem Extremfall ist sogar eine komplette Verstopfung des Sensoreinlasskanals möglich, was einem Totalausfall des Sensors gleich kommt.

Im nachfolgenden Ausführungsbeispiel soll die Funktionsweise der erfindungsgemäßen Oberflächenstrukturierung am Beispiel eines Drucksensors gezeigt werden, wie er schematisch in Figur 1 dargestellt ist. Weiterhin ist jedoch auch denkbar, die Erfindung bei anderen Sensoren einzusetzen, die einen regelmäßigen Austausch einer Substanz durch einen Zugang, beispielsweise in eine Kaverne oder einen Hohlraum, erfordern.

Bei dem Drucksensor 100 in Figur 1 handelt es sich um einen Drucksensor, der mittels piezoresistiver Widerstände 120 auf einer Membran 110 einen Druck beispielsweise der Luft in der Kaverne 160 erfasst. Dabei kann der Drucksensor 100 derart ausgestaltet sein, dass der Druck in der Kaverne 160 gegenüber einem Referenzdruck in einer Referenzkammer oder gegenüber dem Umgebungsdruck 170 erfasst wird. Daneben ist auch denkbar, dass der Druck nicht durch piezoresistive Widerstände sondern infolge einer Kapazitätsmessung erfasst wird.

Im vorliegenden Drucksensor 100 nach Figur 1 erfolgt die Druckerfassung durch eine Verbiegung der Membran 110. Die Verbiegung der Membran 170 erzeugt in den piezoresisitven Widerständen 120 eine Größe, die den Druckunterschied zwischen der Kaverne 160 und dem Umgebungsdruck 170 repräsentiert. Dabei können die piezoresistiven Widerstände sowohl innerhalb als auch außerhalb der Kaverne 140 auf der Membran 110 aufgebracht sein. Da sich die Membran 110 in Abhängigkeit vom Druckunterschied zwischen der Kaverne 140 und dem Umgebungsdruck 160 bzw. dem Referenzdruck ändert, sind beide Stellen für die Messwertaufnahme geeignet. Neben voneinander abgrenzbaren Widerstandsstrukturen 120 auf der Membran 110 können jedoch auch Widerstandsschichten vorgesehen sein, die über einen Großteil der Membran 110 angeordnet sind und ebenfalls eine Messwertgröße aufgrund der Verbiegung bzw. Verformung der Membran ergeben.

Die Herstellung eines derartigen Drucksensors 100 soll an dieser Stelle jedoch nicht ausführlich beschrieben werden, da derartige Herstellungsprozesse bereits zum Stand der Technik gehören und beispielsweise in den eingangs erwähnten Schriften nachgelesen werden können. Vielmehr soll lediglich darauf hingewiesen werden, dass der Sensor 100 typischerweise nicht aus einem einzigen Bauelement sondern aus verschiedenen mikromechanischen Elementen bzw. unterschiedlichen Schichten bestehen kann. Um diesen Aufbau anzudeuten, besteht der Sensor 100 aus einem Bauelement 130 und einem Bauelement 140. Üblicherweise wird die Membran 110 durch mikromechanische Prozessschritte aus einem Halbleitersubstrat hergestellt oder auf ein entsprechendes Substrat aufgebracht.

Der Austausch des Gases im Drucksensor 100 zwischen der Kaverne 160 und dem Außenbereich 170 erfolgt über den Zugang 150. In der schematischen Darstellung der Figur 1 ist der Zugang 150 leicht gewinkelt gezeigt, wobei das lediglich eine spezielle Gestaltung der Zugangsöffnung in die Kaverne 160 darstellt. Es sind auch andere Ausgestaltungen denkbar, die beispielsweise zum Ziel haben, das Eindringen von Partikeln in die Kaverne 160 zu erschweren oder das Austreten zu erleichtern. Neben der Gestaltung der Zugangsöffnung 150 kann jedoch auch die Positionierung des Sensors 100 dieses Ziel beispielsweise durch eine Ausrichtung der Öffnung nach unten erleichtern.

Nach der Herstellung des Sensors 100 wird in einem weiteren Schritt zumindest auf einen Teil der Wände der Zugangsöffnung 150 eine Substanz aufgebracht, mit deren Hilfe eine Oberflächenstrukturierung erzeugt werden kann. In Figur 2 ist die Substanz als dünner Film 200 auf den Wänden der Zugangsöffnung 150 dargestellt. Darüber hinaus kann jedoch auch vorgesehen sein, dass Teile der Kaverne 160 ebenfalls mit dieser Substanz bedeckt werden. Um die Substanz dauerhaft an die Wand der Zugangsöffnung 150 zu binden, kann vorgesehen sein, die Substanz durch einen Härtungsprozess auszuhärten, beispielsweise durch eine UV-Bestrahlung. Je nach eingesetzter Substanz kann die Ausbildung einer definierten Oberflächenstrukturierung schon im nicht ausgehärteten Zustand oder auch erst nach der Aushärtung vorhanden sein. Darüber hinaus können aber auch Substanzen vorgesehen sein, die ohne Aushärtung eine dauerhafte Verbindung zu der Wand herstellen.

Die Oberflächenstrukturierung durch die Substanz wird vorzugsweise im Mikro- bzw. im Nanometermaßstab vorliegen und eine Hydrophobie aufweisen. Durch eine derartige wasserabweisende Schicht 200 wird das abperlen beispielsweise von Kondenswasser erleichtert. Als weitere Vergößerung der "selbstreinigenden" Oberflächenstrukturierung können Substanzen verwendet werden, die eine ultra-Hydrophobie aufweisen bzw. den sog. Lotus-Effekt auslösen. Bei diesem Effekt handelt es sich um eine Nanostrukturierung einer Oberfläche, die eine Selbstreinigung durch bewegte Flüssigkeit nach sich zieht.

Zur Verdeutlichung der Wirkungsweise entsprechender behandelter und damit strukturierter Oberflächen, sind in den Figuren 3a-c schematisch die verschiedenen Vorgänge bei der Selbstreinigung aufgezeigt. Ausgangspunkt ist in Figur 3a eine leicht geneigte Oberfläche 300, die Wassertropfen 310 und Schmutzpartikel 320 aufweist. Ohne eine besondere Behandlung der Oberfläche 300 setzten sich beispielsweise Kondenswassertropfen 310 auf der Oberfläche 300 fest und bleiben dort haften. Erst bei Überschreiten einer gewissen Tropfengröße fangen diese Wassertropfen 310 an, sich entlang der Oberfläche nach unten zu bewegen. Schmutzpartikel 320 zeigen ein ähnliches Verhalten.

Figur 3b zeigt eine Oberfläche 300, die mit einer hydrophoben Oberflächenstrukturierung ausgestattet ist. Wie in den aufeinander folgenden Figuren 3b₁-b₃ zu sehen ist, gleitet der Wassertropfen 310 nach unten, ohne an der Oberfläche 300 haften zu bleiben. Bei der Bewegung des Wassertropfens werden die Schmutzpartikel 320 von der Oberfläche 300 gelöst und "verschoben". Bei mehreren solcher "Tropfenläufe" kann somit eine Reinigung der Oberfläche erreicht werden, indem die Schmutzpartikel an den unteren Rand der Oberfläche befördert werden.

Durch eine Behandlung der Oberfläche, die den Lotus-Effekt auf der Oberfläche erzeugt, kann ein Vorgang beobachtet werden, der in Figur 3c dargestellt ist. Dabei hat ein Wassertropfen 310 durch die hydrophobe Strukturierung der Oberfläche 300 keinen direkten Kontakt zur Oberfläche 300, so dass der Wassertropfen quasi auf der Oberfläche gleitet. Schmutzpartikel können durch die spezielle Oberflächenstruktur ebenfalls nicht direkt mit der Oberfläche wechselwirken, weshalb sie auch leichter gelöst und vom Wassertropfen komplett mitgenommen werden können. Ein derartiger Vorgang ist in Figur 3c₁-c₃ zu sehen.

Mittlerweile sind verschiedene Substanzen bekannt, die einen oben beschriebenen hydrophoben Effekt bzw. einen Lotus-Effekt hervorrufen. Typischerweise handelt es sich bei diesen Substanzen um Polymere oder Kunststoffe, die nachträglich auf eine Oberfläche aufgebracht bzw. verarbeitet werden können. Eine Möglichkeit bei der vorstehenden Anwendung besteht dabei beispielsweise darin, dass die Zugangsöffnung 150 mit einem dünnen Film einer solchen Substanz ausgekleidet wird und im Rahmen eines Aushärtungsprozesses ausgehärtet wird.

Ein weiteres Ausführungsbeispiel, das mit dem ersten kombiniert werden kann, besteht darin, dass die Substanz, die auf die Wände der Zugangsöffnung aufgebracht wird, wenigstens einen Teil eines elektrischen Bauelements an den Wänden fixiert. So ist beispielsweise vorstellbar, dass mit der Substanz ein dünner Heizdraht in der Zugangsöffnung fest gemacht wird, der durch eine entsprechende Schaltung zu vorgebbaren Zeitpunkten angesteuert werden kann. Denkbar ist hierbei, dass durch die Erhitzung des Kanals etwaige Kondenswassertropfen an den Wänden verdampft werden können.

Eine mögliche Anwendung eines Drucksensors mit dem beschriebenen Ausführungsbeispiel kann dabei im Rahmen der Druckerfassung in einem Kraftfahrzeug erfolgen. So ist denkbar, dass bei bestimmten Betriebsvorgängen des Kraftfahrzeugs der Heizdraht im Kanal kurzzeitig aufgeheizt wird, um Wasserreste zu entfernen und den Sensor betriebsbereit zu halten. Besonders nach dem Startvorgang eines Kraftfahrzeugs kann es beispielsweise sinnvoll sein, die Kanäle von eventuell durch die Standzeit entstandenen Kondenswasser zu befreien.

Durch Aufbringen einer hydrophoben Substanz bzw. einer Anti-Haftschicht auf die Innenflächen eines oben beschriebenen Sensoreinlaßkanals kann man die Adhäsionseigenschaften verringern. Weiterhin kann man dies durch eine entsprechend gewählte Oberflächenbeschaffenheit (z.B. Rauhigkeit) erreichen. Eine geeignete Oberflächenstrukturierung der Kanalinnenwände kann bewirken, dass Wasser sehr schlechte Benetzungseigenschaften bezüglich dieser Oberfläche erhält, so dass Kondenswasser tropfenweise abperlt (siehe Lotus-Effekt). Dazu muss ein bestimmtes Verhältnis von Amplitude zu Ortsfrequenz der Oberflächenstruktur gegeben sein. Dies führt zu selbstreinigenden Oberflächen.

## Patentansprüche

1. Verfahren zur Herstellung eines mikromechanischen Sensors (100), wobei zur Herstellung des Sensors (100) wenigstens
- ein erster Bereich (160) und
- ein Zugangskanal (150)
erzeugt wird, wobei vorgesehen ist, dass
- im ersten Bereich (160) wenigstens eine Zustandsgröße einer Substanz erfasst wird und
- durch den Zugangskanal (150) ein Austausch der Substanz zwischen dem ersten Bereich (160) und dem zweiten Bereich (170) ermöglicht wird, und
- wenigstens der Zugangskanal (150) durch einen Ätzprozess erzeugt wird,
**dadurch gekennzeichnet, dass**
nach der Erzeugung des Zugangskanals (150) die Wand des Zugangskanals wenigstens teilweise mit einer vorgebbaren Oberflächenstrukturierung (200) versehen wird.

2. Verfahren zur Herstellung eines mikromechanischen Sensors nach Anspruch 1, **dadurch gekennzeichnet, dass**
- der Zugangskanal (150) aus einem ersten Material herausgeätzt wird und
- in einem weiteren Verfahrensschritt wenigstens teilweise eine hydrophobe Oberflächenstrukturierung (200) an den Wände des Zugangskanals erzeugt wird,
wobei insbesondere vorgesehen ist, dass die Oberflächenstrukturierung (200)
- durch ein zweites Material erzeugt wird, welches nach dem Ätzprozess auf die Wand des Zugangskanals aufgebracht wird, und/oder
- eine Strukturierung in Mikro- oder Nanometermaßstab aufweist.

3. Verfahren zur Herstellung eines mikromechanischen Sensors nach Anspruch 2, **dadurch gekennzeichnet, dass** in das zweite Material, welches eine hydrophobe Oberflächenstrukturierung (200) auf wenigstens einem Teil der Wand des Zugangskanals erzeugt, wenigstens ein Teil eines elektrischen Bauelements integriert ist, wobei insbesondere vorgesehen ist, dass das elektrische Bauelement ein Heizelement repräsentiert, welches zu vorgebbaren Zeitpunkten betrieben werden kann.

4. Verfahren zur Herstellung eines mikromechanischer Sensors nach Anspruch 2, **dadurch gekennzeichnet, dass**
- das erste Material Silizium, Siliziumoxid, dotiertes Silizium oder ein anderes typisches Material zur Herstellung eines mikromechanischen Sensors und/oder
- das zweite Material ein Polymer
umfasst.

5. Verfahren zur Herstellung eines mikromechanischen Sensors nach einem der vorhergehenden Ansprüche, **dadurch gekennzeichnet, dass**
- der erste Bereich (160) eine Kaverne umfasst und/oder
- der zweite Bereich (170) wenigstens einen Teil des den Sensor (100) umgebenden Außenraums umfasst und/oder
- die Zustandsgröße durch ein Sensorelement (110, 120) erfasst wird,
wobei als Sensorelement
- eine Membran (110),
- eine Widerstandsstruktur (120), und/oder
- ein Piezoelement
vorgesehen ist, und/oder
- als Zustandsgröße
- ein Druck,
- eine Temperatur,
- eine Dichte, und/oder
- eine Luftmasse
erfasst wird, und/oder
- als Substanz
- ein Gas, und/oder
- eine Flüssigkeit
vorgesehen ist.

6. Mikromechanischer Sensor (100), mit wenigstens
- einem erste Bereich (160)und
- einem Zugangskanal (150),
wobei vorgesehen ist, dass
- im ersten Bereich (160) wenigstens eine Zustandsgröße einer Substanz erfasst wird und
- durch den Zugangskanal (150) ein Austausch der Substanz in dem ersten Bereich (160) mit einem zweiten Bereich (170) ermöglicht wird, und
- wenigstens der Zugangskanal (150) durch einen Ätzprozess erzeugt wird,
**dadurch gekennzeichnet, dass**
die Wand des Zugangskanal wenigstens teilweise mit einer definierten Oberflächenstrukturierung (200) versehen ist.

7. Mikromechanischer Sensor nach Anspruch 6, **dadurch gekennzeichnet, dass**
- der Zugangskanal (150) aus einem ersten Material durch einen Ätzprozess erzeugt wurde und
- die Wand des Zugangskanals wenigstens teilweise eine hydrophobe Oberflächenstrukturierung (200) aufweisen,
wobei insbesondere vorgesehen ist, dass die Oberflächenstrukturierung
- durch ein zweites Material erzeugt wird, welches nach dem Ätzprozess auf die Wand des Zugangskanals aufgebracht wurde, und/oder
- eine Strukturierung in Mikro- oder Nanometermaßstab aufweist.

8. Mikromechanischer Sensor nach Anspruch 7, **dadurch gekennzeichnet, dass** in das zweite Material, welches eine hydrophobe Oberflächenstrukturierung (200) auf wenigstens einem Teil der Wand des Zugangskanals erzeugt, wenigstens ein Teil eines elektrischen Bauelements integriert ist, wobei insbesondere vorgesehen ist, dass das elektrische Bauelement ein Heizelement repräsentiert, welches zu vorgebbaren Zeitpunkten betrieben werden kann.

9. Mikromechanischer Sensor nach Anspruch 7, **dadurch gekennzeichnet, dass**
- das erste Material Silizium, Siliziumoxid, dotiertes Silizium oder ein anderes typisches Material zur Herstellung eines mikromechanischen Sensors und/oder
- das zweite Material ein Polymer
umfasst.

10. Mikromechanischer Sensor nach einem der vorhergehenden Ansprüche, **dadurch gekennzeichnet, dass**
- der erste Bereich (160) eine Kaverne umfasst und/oder
- der zweite Bereich (170) wenigstens einen Teil des den Sensor (100) umgebenden Außenraums umfasst und/oder
- die Zustandsgröße durch ein Sensorelement (110, 120) erfasst wird,
wobei als Sensorelement
- eine Membran (110),
- eine Widerstandsstruktur (120), und/oder
- ein Piezoelement
vorgesehen ist, und/oder
- als Zustandsgröße
- ein Druck,
- eine Temperatur,
- eine Dichte, und/oder
- eine Luftmasse
erfasst wird, und/oder
- als Substanz
- ein Gas, und/oder
- eine Flüssigkeit
vorgesehen ist.
